# FASCICULE DE BREVET EUROPEEN

(11) **EP 3 116 136 B1**
(45) Date de publication et mention de la délivrance du brevet: **08.07.2020**
(21) Numéro de dépôt: 16156142.8
(22) Date de dépôt: 17.02.2016
(51) Int. Cl.: H04B 3/54, H04L 25/02, H04L 27/26

(54) **PROCEDE D'ESTIMATION D'UN CANAL DE TRANSMISSION TEMPORELLEMENT INVARIANT, ET RECEPTEUR CORRESPONDANT**
VERFAHREN ZUM SCHÄTZEN EINES ZEITLICH UNVERÄNDERLICHEN ÜBERTRAGUNGSKANALS, UND ENTSPRECHENDER EMPFÄNGER
METHOD FOR ESTIMATING A TIME-INVARIANT TRANSMISSION CHANNEL, AND CORRESPONDING RECEIVER

(30) Priorité: 09.07.2015 FR 1556489
(43) Date de publication de la demande: 11.01.2017
(73) Titulaire: STMicroelectronics (Rousset) SAS, 13790 Rousset (FR)
(72) Inventeur: DEMAJ, Pierre, 06200 Nice (FR); BOUVET, Yoann, 06650 Opio (FR)
(74) Mandataire: Casalonga

(56) Documents cités:
- JP-A- 2009 089 146
- US-A1- 2013 170 539
- Mario Bogdanovic ET AL: "IMPROVED LEAST SQUARE CHANNEL ESTIMATION ALGORITHM FOR OFDM BASED COMMUNICATION OVER POWER LINES", The Mediterranean Journal of Computers and Networks, 30 juillet 2014 (2014-07-30), pages 232-238, XP055314959, Extrait de l'Internet: URL:https://bib.irb.hr/datoteka/717715.Bog danovic_MEDJCN.pdf [extrait le 2016-10-28]

## Description

Des modes de mise en œuvre et de réalisation de l'invention concernent la transmission d'informations sur un canal de transmission, et notamment lorsque ce canal est une ligne électrique, la transmission d'informations par courant porteur en ligne (PLC : Power Line Communications), et plus particulièrement l'estimation de la fonction de transfert du canal de transmission. Des exemples d'estimation de la fonction de transfert du canal selon l'art antérieure sont divulgués dans la demande de brevet US 2013/170539, ainsi que dans "IMPROVED LEAST SQUARE CHANNEL ESTIMATION ALGORITHM FOR OFDM BASED COMMUNICATION OVER POWER LINES", par Mario Bogdanovic et al., The Mediterranean Journal of Computers and Networks, 30 juillet 2014, pages 232-238.

Des modes de mise en œuvre et de réalisation de l'invention sont compatibles notamment mais non exclusivement avec la norme PLC-G3 telle que définie par exemple dans la version d'avril 2015 du document de l'Alliance G3-PLC intitulé «Narrowband OFDM PLC specifications for G3-PLC networks » à laquelle l'homme du métier pourra se référer à toutes fins utiles.

La technologie de courant porteur en ligne vise à transmettre des données numériques en exploitant l'infrastructure existante du réseau électrique. Elle permet notamment le relevé à distance de compteurs électriques, les échanges entre véhicules électriques et les bornes de recharge ou encore la gestion et le contrôle des réseaux d'énergie (smart grid)

La technologie de courant porteur en ligne (PLC) incorpore notamment la communication par courant porteur en ligne bande étroite (Narrow band Power line Communication : N-PLC) qui est généralement définie comme une communication sur une ligne électrique opérant à des fréquences de transmission jusqu'à 500 KHz.

La communication N-PLC utilise ainsi généralement les bandes de fréquences définies notamment par le comité européen de normalisation électrotechnique (CENELEC) ou par la Commission Fédérale des Communications (FCC).

Ainsi si l'on considère la bande de fréquences CENELEC A (3-95 kHz), les fréquences de transmission se situent entre 35,9375 et 90,625 KHz pour la norme PLC-G3.

Les signaux véhiculés par courant porteur en ligne et reçus par le récepteur résultent d'une combinaison de plusieurs signaux ayant emprunté au sein du canal de transmission (la ligne électrique) plusieurs chemins ou trajets de propagation ayant chacun son propre retard temporel et sa propre atténuation (le canal de transmission est un canal de transmission multi-trajets).

La performance globale d'un récepteur dépend fortement de la qualité de son estimation de canal, c'est-à-dire de l'estimation de la fonction de transfert de ce canal.

Les récepteurs actuels, compatibles avec la norme PLC-G3, sont adaptés pour effectuer une estimation de canal lorsque celui-ci est linéaire et temporellement invariant (LTI : « Linear Time Invariant), en utilisant deux symboles OFDM pour estimer la fonction de transfert du canal.

Selon un mode de mise en œuvre et de réalisation, il est proposé d'augmenter de plusieurs dB la performance de décodage d'un récepteur compatible notamment avec la norme PLC-G3 et connecté sur un canal du type LTI.

Selon un aspect, il est proposé un procédé de traitement d'un signal analogique de canal issu d'un canal de transmission (par exemple une ligne électrique, le signal étant alors véhiculé par courant porteur de ligne (PLC)) ; le signal analogique de canal véhicule des trames de symboles et le canal de transmission est considéré comme étant linéaire et temporellement invariant pour toute la durée d'au moins une trame ;
le procédé comprend une conversion analogique/numérique du signal analogique de canal de façon à obtenir un signal numérique de canal, un traitement numérique d'estimation de canal et un décodage de symboles effectués sur le signal numérique de canal ;
selon une caractéristique générale de cet aspect, le traitement numérique d'estimation de canal comprend, pour ladite au moins une trame,
une élaboration d'au moins trois fonctions de transfert dudit canal respectivement associées à au moins trois symboles de référence de ladite au moins une trame, et
un traitement de moyennage desdites fonctions de transfert obtenues de façon à obtenir une fonction de transfert moyenne ;
le décodage des symboles de ladite au moins une trame suivant lesdits symboles de référence est alors effectué en utilisant cette fonction de transfert moyenne.

Ainsi selon cet aspect, on augmente le nombre de symboles à partir desquels on estime le canal et on effectue une moyenne des fonctions de transfert associées à ces symboles pour utiliser ensuite cette fonction de transfert moyenne dans le décodage des symboles.

Ceci permet d'augmenter significativement le rapport signal sur bruit de la fonction de transfert moyenne, ce qui *in fine,* va conduire à une augmentation de la performance de décodage de plusieurs dB.

Même si l'utilisation de trois symboles de référence apportent une amélioration par rapport aux spécifications de la norme PLC-G3, il est préférable en pratique d'utiliser un plus grand nombre de symboles de référence pour améliorer davantage les performances du décodage.

Il est également avantageux d'utiliser des symboles de référence successifs.

Ainsi selon un mode préféré de mise en œuvre, le traitement numérique d'estimation de canal comprend, pour ladite au moins une trame une élaboration de M fonctions de transfert respectivement associées à M symboles de référence successifs de ladite au moins une trame, M étant supérieur ou égal à 3, et de préférence bien supérieur à 3, par exemple supérieur à 10.

Le signal analogique de canal qui va subir la conversion analogique/numérique peut être par exemple le signal analogique directement issu du canal ou bien comme c'est généralement le cas, le signal analogique délivré par un étage d'entrée analogique (comportant notamment des filtres passe-bande, des filtres passe-bas et un amplificateur) connecté sur le canal de transmission.

Le signal analogique de canal est par exemple conforme à la norme PLC-G3.

Dans ce cas, le nombre M de symboles de référence peut être égal à 15 et s'étendent alors ensemble sur une durée égale à 10,42 ms (puisque chaque symbole de référence a une durée égale à 0,695 ms). Cette durée totale de 10,42 ms est légèrement supérieure à la moitié de la période du courant alternatif destiné à circuler sur la ligne électrique (soit 20 ms pour une fréquence de 50 Hz).

De la même manière, dans les pays où la fréquence du secteur est 60 Hz, la moitié de la période du courant porteur est égale à 8,33ms et le nombre M de symboles de référence peut être pris égal à 12.

Le canal est considéré comme temporellement invariant pour toute la durée de ladite au moins une trame.

Bien entendu le canal peut être temporellement invariant au cours de plusieurs trames, successives ou non, et dans ce cas on applique avantageusement les différentes étapes du procédé mentionnées ci-avant pour chacune de ces trames, le canal étant considéré, lors de la réception de chacune de ces trames, comme temporellement invariant pour toute la durée de la trame considérée.

Du côté émission, le signal analogique de canal est issu d'une conversion numérique/analogique d'un signal numérique initial, et lorsque la fréquence d'échantillonnage du signal numérique de canal (en réception) est différente de la fréquence d'échantillonnage du signal numérique initial (en émission), il est préférable de tenir compte de ce décalage de fréquence d'échantillonnage (« sampling frequency offset ») pour corriger les fonctions de transfert.

Ainsi selon un mode de mise en œuvre, le traitement numérique d'estimation de canal comprend une élaboration de M fonctions de transfert de base respectivement associées auxdits M symboles de référence de ladite trame reçue, et un traitement de correction de ces M fonctions de transfert de base avec un déphasage correspondant à ce décalage de fréquence d'échantillonnage de façon à obtenir lesdites M fonctions de transfert.

Les symboles de référence de la trame reçue à partir desquels vont être déterminées les différentes fonctions de transfert, sont par exemple des symboles de la trame reçue correspondant à des symboles connus de la trame transmise et/ou sont des symboles décodables sans connaître la fonction de transfert du canal de transmission.

Ainsi, dans le cas de la norme PLC-G3, chaque trame reçue comporte un préambule suivi d'un en-tête suivi d'un champ utile, et les symboles de référence peuvent comprendre les symboles de l'en-tête d'une trame, qui sont décodables sans connaître la fonction de transfert de canal de transmission puisqu'ils sont codés de façon différentielle, ainsi que les deux symboles du champ utile (« payload ») de la trame qui correspondent aux deux symboles connus S1, S2 du champ utile de la trame transmise.

On notera donc ici que bien que la norme PLC-G3 ne prévoie comme symboles pilotes pour l'estimation de la fonction de transfert du canal, que deux symboles connus, à savoir les symboles S1 et S2, il est avantageusement prévu ici d'augmenter ce nombre de symboles pilotes en utilisant avantageusement les symboles de l'en-tête d'une trame qui sont décodables sans nécessiter de connaître la fonction de transfert du canal.

On peut alors aisément affiner l'estimation de canal et obtenir plusieurs fonctions de transfert qui seront ensuite moyennées.

Cela étant il aurait été également possible d'utiliser également comme symboles de référence tout ou partie des symboles connus du préambule d'une trame afin d'augmenter encore la valeur de M et améliorer ainsi l'estimation de canal.

Selon un mode de mise en œuvre, chaque élaboration d'une fonction de transfert associée à un symbole décodable reçu comprend un décodage du symbole reçu, un ré-encodage de ce symbole décodé de façon à obtenir un symbole ré-encodé et une détermination de la fonction de transfert du canal à partir dudit symbole ré-encodé et dudit symbole décodable reçu.

Selon un autre aspect, il est proposé un récepteur, comprenant
un étage d'entrée destiné à être connecté sur un canal de transmission et configuré pour délivrer un signal analogique de canal issu du canal de transmission, le signal analogique de canal étant destiné à véhiculer des trames de symboles, et le canal de transmission étant considéré comme étant linéaire et temporellement invariant pour toute la durée d'au moins une trame,
un étage de conversion analogique/numérique du signal analogique de canal pour délivrer un signal numérique de canal, et
un étage de traitement dudit signal numérique de canal comprenant des moyens d'estimation de canal et des moyens de décodage de symboles ;
selon une caractéristique générale de cet autre aspect, les moyens d'estimation comprennent
des moyens d'élaboration configurés pour élaborer pour ladite au moins une trame, au moins trois fonctions de transfert dudit canal respectivement associées à au moins trois symboles de référence de ladite au moins une trame, et
un bloc moyenneur configuré pour effectuer un traitement de moyennage desdites fonctions de transfert obtenues de façon à obtenir une fonction de transfert moyenne ;
les moyens de décodage sont alors configurés pour décoder les symboles de ladite au moins une trame suivant lesdits symboles de référence en utilisant cette fonction de transfert moyenne.

Selon un mode de réalisation, les moyens d'élaboration sont configurés pour élaborer pour ladite au moins une trame, M fonctions de transfert respectivement associées à M symboles de référence successifs de ladite au moins une trame, M étant supérieur ou égal à 3.

Selon un mode de réalisation, le signal analogique de canal est issu d'une conversion numérique/analogique d'un signal numérique initial, et lorsque la fréquence d'échantillonnage du signal numérique de canal est différente de la fréquence d'échantillonnage du signal numérique initial, les moyens d'élaboration sont en outre configurés pour élaborer M fonctions de transfert de base respectivement associées auxdits M symboles de référence de ladite trame reçue, et corriger ces M fonctions de transfert de base avec un déphasage correspondant à ce décalage de fréquence d'échantillonnage de façon à obtenir lesdites M fonctions de transfert.

Les symboles de référence de la trame reçue peuvent correspondre à des symboles connus de la trame transmise et/ou être des symboles décodables sans connaître la fonction de transfert du canal de transmission.

Selon un mode de réalisation, les moyens d'élaboration sont configurés pour élaborer une fonction de transfert associé à un symbole décodable reçu par un décodage du symbole reçu, un ré-encodage de ce symbole décodé de façon à obtenir un symbole ré-encodé et une détermination de la fonction de transfert du canal à partir dudit symbole ré-encodé et dudit symbole décodable reçu.

Le signal peut être modulé selon une modulation OFDM.

Selon un mode de réalisation le canal de transmission est une ligne électrique et le signal analogique de canal est destiné à être véhiculé par courant porteur de ligne.

Le signal analogique de canal peut être conforme à la norme PLC-G3.

Dans ce cas, chaque trame reçue comporte un préambule suivi d'un en-tête suivi d'un champ utile et lesdits symboles de référence peuvent comporter les symboles de l'entête et deux symboles du champ utile correspondant à deux symboles connus de la trame transmise.

D'autres avantages et caractéristiques de l'invention apparaîtront à l'examen de la description détaillée de modes de mise en œuvre et de réalisation, nullement limitatifs, et des dessins annexés sur lesquels :

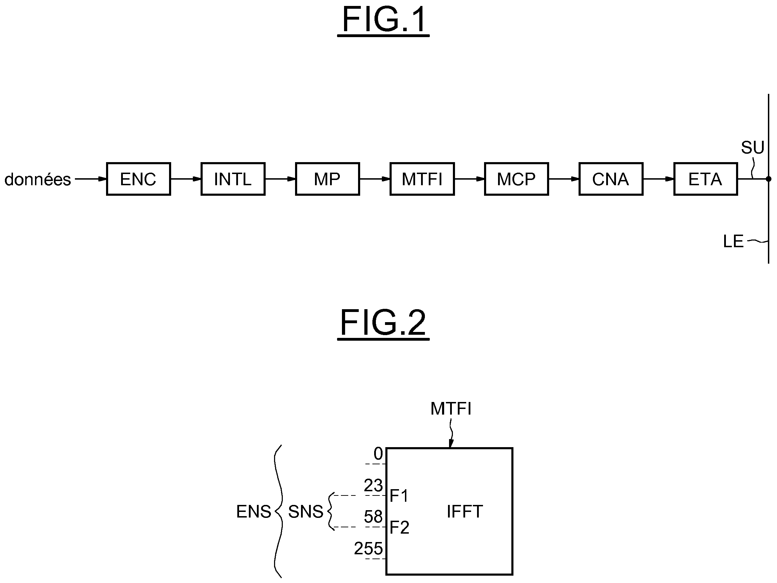

- les figures 1 à 11 illustrent schématiquement différents modes de mise en œuvre et de réalisation de l'invention.

Les modes de mise en œuvre et de réalisation qui vont maintenant être décrits le sont dans le cadre d'une transmission d'informations par courant porteur en ligne (CPL) conforme à la norme PLC-G3, bien que l'invention ne soit pas limitée à ce type d'application.

Dans tout ce qui suit, à chaque fois qu'on citera la norme PLC-G3, on supposera que l'on considère la bande de fréquences CENELEC A (3-95 kHz).

On se réfère maintenant à la figure 1 pour illustrer schématiquement un exemple d'émetteur capable de transmettre un signal utile SU sur une ligne électrique LE par courant porteur en ligne.

La chaîne de transmission comprend par exemple un encodeur ENC, par exemple un encodeur convolutionnel, recevant les données à transmettre de moyens de codage de source. Des moyens d'entrelacement INTL sont connectés à la sortie de l'encodeur et sont suivis par des moyens de « mappage » (mapping means) qui transforment les bits en symboles selon un schéma de transformation dépendant du type de modulation utilisée, par exemple une modulation de type BPSK ou plus généralement une modulation QAM.

Chaque symbole contient des coefficients de modulation associés à des porteuses qui vont être modulées en conséquence. Les symboles sont délivrés en entrée de moyens de traitement MTFI destinés à effectuer une opération de transformée de Fourier inverse rapide (IFFT).

On notera ici en se référant plus particulièrement à la figure 2, que les porteuses modulées forment un sous-ensemble SNS de porteuses parmi un ensemble ENS disponible de porteuses (ensemble qui correspond à la taille de la transformée de Fourier inverse).

Ainsi, dans la norme PLC-G3, la taille de la transformée de Fourier inverse est égale à 256 tandis que les porteuses modulées du sous-ensemble SNS sont comprises entre les rangs 23 et 58, ce qui correspond à une bande fréquentielle F1-F2 comprise entre 35,9375 et 90,625 KHz. La fréquence d'échantillonnage est ici égale à 400 KHz conduisant à un espacement entre les porteuses égal à 1,5625 KHz, ce qui rend ainsi les fréquences orthogonales (modulation OFDM).

Les coefficients de modulation associés aux porteuses non utilisées sont égaux à 0.

Le signal OFDM dans le domaine temporel est généré en sortie des moyens de traitement MTFI, et des moyens MCP rajoutent à chaque symbole OFDM dans le domaine temporel, un préfixe cyclique qui est une recopie en tête du symbole OFDM d'un certain nombre d'échantillons situés à la fin de ce symbole.

A titre d'exemple, dans la norme PLC-G3, la longueur du préfixe cyclique est de 30 échantillons pour une fréquence d'échantillonnage de 400 KHz.

Le signal est ensuite converti dans un convertisseur numérique/analogique CNA puis traité dans un étage ETA, communément désigné par l'homme du métier sous le vocable « Analog Front End », où il subit notamment une amplification de puissance, avant d'être transmis sur la ligne électrique LE.

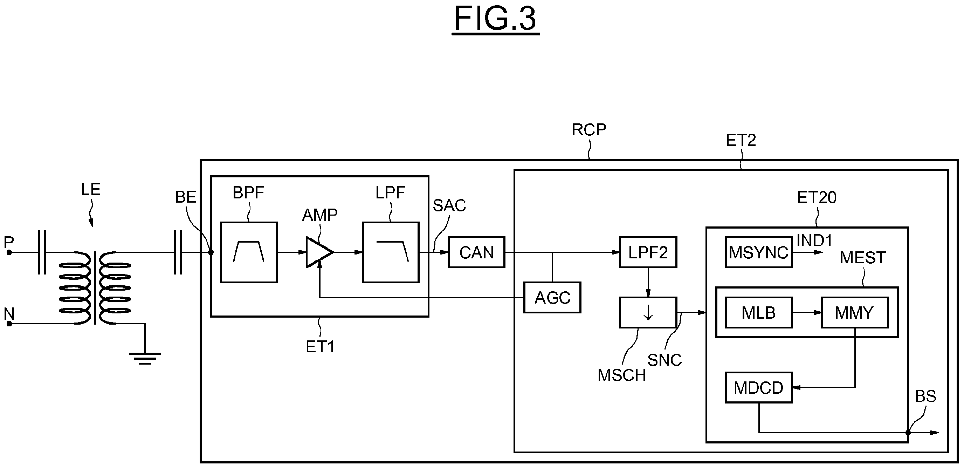

En réception, on voit, en se référant plus particulièrement à la figure 3, que le récepteur RCP comporte ici un étage d'entrée analogique ET1 dont la borne d'entrée BE est connectée sur la ligne électrique LE.

Cet étage d'entrée analogique ET1 comporte de façon classique un filtre passe bande BPF, un filtre passe bas LPF, ainsi que des moyens d'amplification AMP. La sortie de l'étage ET1 est connectée à un étage de conversion analogique/numérique CAN dont la sortie est connectée à l'entrée de moyens ou étage de traitement ET2.

L'étage de traitement ET2 comporte ici des moyens de contrôle automatiques de gain AGC permettant de contrôler la valeur du gain des moyens d'amplification AMP de l'étage ET1.

Le signal SAC délivré en sortie de l'étage analogique ET1 et en entrée de l'étage de conversion analogique/numérique CAN désigne un signal analogique de canal issu du canal de transmission (ligne électrique) LE.

L'étage de traitement ET2 comporte également un filtre passe bas LPF2 suivi, bien que cela ne soit pas indispensable, de moyens de sous-échantillonnage MSCH. La fréquence d'échantillonnage du signal en amont des moyens MSCH est notée Fs tandis que la fréquence d'échantillonnage du signal en sortie des moyens MSCH est notée Fss.

Le signal SNC en sortie des moyens MSCH désigne alors ici un signal numérique de canal qui est issu de la conversion analogique/numérique du signal analogique de canal SAC et sur lequel vont être appliqués notamment un traitement de synchronisation, une estimation de canal et des décodages de symboles comme on va le voir plus en détail ci-après.

L'estimation de canal est effectuée une fois la synchronisation acquise.

La fréquence Fc désigne la fréquence de calcul à laquelle vont être effectués les différents traitements.

Dans la norme PLC-G3 par exemple, la fréquence d'échantillonnage Fs spécifiée est de 400 KHz pour une taille de FFT de 256.

Bien qu'il eût été possible d'effectuer toutes les opérations de ces différents traitements à une fréquence de calcul Fc égale à la fréquence d'échantillonnage Fs de 400 KHz, le fait de sous-échantillonner le signal à une fréquence Fss inférieure à Fs et d'effectuer toutes les opérations à la fréquence de calcul Fc égale à Fss permet de réduire la complexité d'implémentation de l'étage de traitement et permet également d'effectuer un traitement de transformée de Fourier rapide directe (FFT) ayant une taille réduite par rapport à la taille spécifiée de 256.

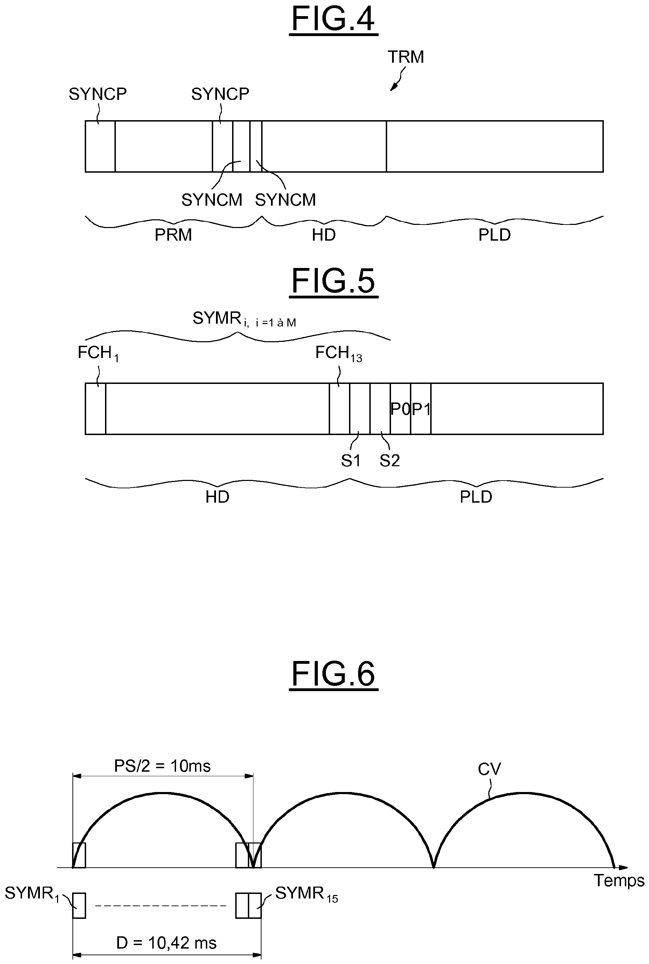

Avant de revenir plus en détail sur les différents moyens qui sont incorporés dans l'étage de traitement ET2, on se réfère maintenant plus particulièrement à la figure 4 pour illustrer la structure d'une trame véhiculant des symboles, par exemple dans le cadre de la norme PLC-G3.

La trame reçue TRM comprend un préambule PRM comportant ici huit symboles connus SYNCP suivis d'un symbole de phase opposée SYNCM lui-même suivi d'un demi-symbole SYNCM.

La trame TRM comporte ensuite un en-tête (header) HD suivi d'un champ utile PLD contenant des symboles de données utiles à décoder et plus connu par l'homme du métier sous la dénomination anglosaxonne de « payload ».

Les symboles de l'en-tête HD contiennent notamment des informations de contrôle pour le décodage des données du champ PLD ainsi que le nombre d'octets à décoder dans le champ PLD.

Le préambule PRM de la trame TRM permet au récepteur de se synchroniser c'est-à-dire d'obtenir une indication IND1 permettant de retrouver la structure de la trame afin de pouvoir repérer le début de l'en-tête HD.

Le canal de transmission est un canal linéaire c'est-à-dire qu'il se comporte comme un filtre linéaire.

On considère ici en outre que pour une trame considérée le canal est linéaire temporellement invariant (LTI) pour toute la trame. En d'autres termes les caractéristiques de sa fonction de transfert sont invariantes tout au long de la trame.

Dans certaines applications pour lesquelles l'environnement électrique du canal est connu (en étant par exemple exempt d'objets connectés sur une ligne électrique dont l'impédance globale n'est pas prédominée par un ou des objets dont les caractéristiques électriques génèrent une impédance cyclo-stationnaire tels que des lampes halogènes et/ou des redresseurs de tension), le canal de transmission peut être considéré *de facto* comme temporellement invariant au cours des trames reçues.

Dans d'autres applications, la connaissance de l'état temporellement invariant du canal au cours de la trame considérée peut résulter par exemple d'une détection préalable de l'état du canal, en particulier mais non limitativement celle décrite dans la demande de brevet français au nom de la Demanderesse, ayant pour titre « *Procédé de traitement d'un signal issu d'un canal de transmission, en particulier un signal véhiculé par courant porteur en ligne, et notamment l'estimation du canal, et récepteur correspondant* », et déposée le même jour que la présente demande de brevet.

Si l'on se réfère maintenant de nouveau à la figure 3, on voit que l'étage de traitement ET2 comporte un sous-étage ET20 incorporant différents moyens que l'on va maintenant décrire de façon fonctionnelle. Ces différents moyens peuvent être réalisés de façon logicielle au sein d'un microprocesseur par exemple, formant alors au moins en partie le sous-étage ET20.

Parmi ces différents moyens, on trouve de façon classique, des moyens de synchronisation MSYNC permettant au récepteur de se synchroniser c'est-à-dire d'obtenir ladite indication IND1 permettant de retrouver la structure de la trame afin de pouvoir repérer le début de l'en-tête HD.

Ces moyens de synchronisation peuvent être de structure classique et connue en soi ou bien, en variante, ceux incorporant les moyens de filtrage décrits dans la demande de brevet français n°1552588.

Parmi les autres moyens incorporés dans le sous-étage 20, on trouve des moyens d'estimation de canal MEST comprenant
des moyens d'élaboration MLB configurés, comme on le verra plus en détails ci-après, pour élaborer pour la trame considérée, plusieurs fonctions de transfert du canal respectivement associées à plusieurs symboles de référence de ladite trame, et
un bloc moyenneur MMY configuré pour effectuer un traitement de moyennage desdites fonctions de transfert obtenues de façon à obtenir une fonction de transfert moyenne.

Des moyens de décodage MDCD de structure classique et connue en soi, sont alors configurés pour décoder les symboles de ladite trame suivant lesdits symboles de référence en utilisant cette fonction de transfert moyenne.

Si l'on se réfère maintenant plus particulièrement à la figure 5, on voit que l'en-tête HD de la trame reçue TRM comporte treize symboles FCH₁-FCH₁₃ qui ont été codés à l'émission de façon différentielle et qui sont chacun référencés par rapport au symbole précédent.

La trame TRM comporte par ailleurs au début du champ utile PLD, deux symboles correspondant à deux symboles transmis connus S1, S2. Cela étant à des fins de simplification on désignera également par SI et S2 ces deux symboles reçus.

Les treize symboles FCHᵢ et les deux symboles S1 et S2 forment ici M symboles de référence SYMRᵢ (M est égal à 15 dans cet exemple).

Ces symboles de référence vont être utilisés pour élaborer M fonctions de transfert qui seront ensuite moyennées pour obtenir la fonction de transfert moyenne mentionnée ci-avant.

Sur la figure 6, on a représenté schématiquement par la courbe CV, les variations périodiques de la valeur absolue du signal porteur circulant sur la ligne électrique (courant ou tension alternatif) et, sur cette figure, PS/2 désigne la moitié de la période de ce signal porteur.

Ainsi, pour un courant et une tension alternatifs à 50 Hz, PS/2 est égale à 10 ms.

Puisque chaque symbole de référence SYMRᵢ a dans la norme PLC-G3, une durée égale à 0,695 ms, l'ensemble des 15 symboles de référence SYMR₁-SYMR₁₅ s'étendent temporellement sur une durée totale D égale à 10,42 ms qui est dans l'exemple particulier décrit ici, légèrement supérieure à PS/2.

En d'autres termes, dans le cas présent, la moitié de la période du signal porteur n'est pas un multiple entier de la durée d'un symbole de référence et elle est comprise entre 14 fois 0,695ms et 15 fois 0,695ms.

Cela étant le nombre M n'est pas lié à PS/2 et pourrait être éventuellement supérieur à 15 dans le cas où d'autre symboles de référence pourraient être utilisés comme par exemple certains au moins des symboles du préambule de la trame.

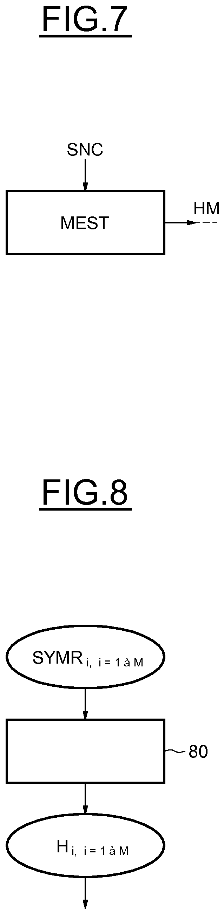

On va maintenant décrire plus en détail la phase d'estimation du canal en se référant plus particulièrement aux figures 7 à 11. Cette phase d'estimation est effectuée une fois la synchronisation du récepteur acquise.

Cette phase d'estimation est effectuée ici à chaque réception de trame pour laquelle le canal est temporellement invariant, et l'on va maintenant décrire les traitements effectués au cours de l'une de ces trames.

Comme illustré sur la figure 7, le traitement d'estimation de canal effectuée par les moyens d'estimation MEST à partir du signal numérique de canal SNC va permettre d'obtenir une fonction de transfert moyenne HM du canal qui va être utilisée pour le décodage des symboles suivant le dernier symbole de référence.

A cet égard, comme illustré sur la figure 8, les moyens d'élaboration MLB élaborent tout d'abord dans l'étape 80 une fonction de transfert Hᵢ du canal pour chaque symbole de référence SYMRᵢ.

Plus précisément, cette fonction de transfert Hᵢ est égale au produit du symbole de référence reçu SYMRᵢ par le conjugué complexe du symbole correspondant transmis par l'émetteur sur le canal de transmission. Dans le cas présent, conforme à la norme PLC-G3, cette fonction de transfert Hᵢ est en fait un vecteur complexe ayant 36 composantes complexes correspondant respectivement aux 36 tons du symbole.

A l'issue de l'étape 80, on obtient donc une séquence initiale de M (=15) fonctions de transfert H₁-H₁₅ associées respectivement aux M (=15) symboles de référence SYMR₁-SYMR₁₅.

Dans le mode de mise en œuvre qui vient d'être décrit, on a supposé que la fréquence d'échantillonnage côté émission était identique à la fréquence d'échantillonnage du signal numérique de canal SNC.

Cela étant, la fréquence d'échantillonnage du signal numérique SNC peut être différente du signal numérique initial élaboré dans l'émetteur.

Dans ce cas, il résulte un décalage de fréquence d'échantillonnage connu par l'homme du métier sous l'expression anglosaxonne « sampling frequency offset » qu'il faut prendre en compte dans l'estimation des fonctions de transfert Hᵢ.

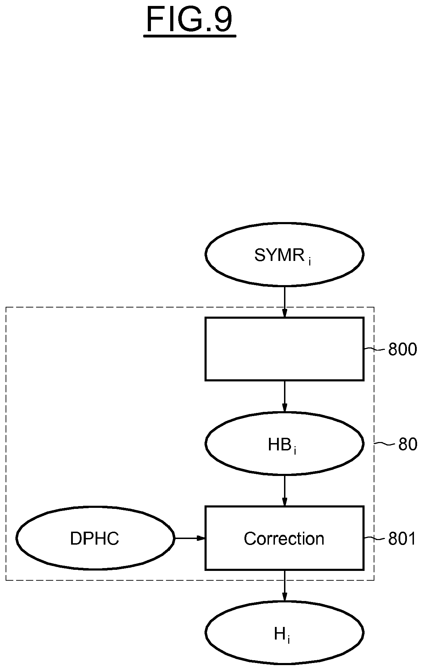

Ceci est illustré schématiquement sur la figure 9.

Plus précisément, on détermine, dans l'étape 800, d'une façon analogue à ce qui a été décrit dans l'étape 80 de la figure 8, des fonctions de transfert de base HBᵢ respectivement associées aux symboles de référence SYMRᵢ.

Puis, on estime le décalage de fréquence (« sampling frequency offset ») en utilisant par exemple deux fonctions de transfert de base relativement temporellement éloignées, par exemple les fonctions de transfert HB₁ et HB₁₃.

Le déphasage qui en résulte est alors obtenu en effectuant le produit de la fonction de transfert HB₁ par le conjugué complexe de la fonction de transfert HB₁₃, le tout divisé par le nombre de symboles.

On obtient alors une correction de déphasage DPHC qui est appliquée dans une étape 801 pour corriger les M fonctions de transfert HBᵢ et obtenir les M fonctions de transfert Hᵢ.

L'estimation d'une fonction de transfert à partir de chacun des symboles S1 et S2 peut s'effectuer sans difficulté puisque les symboles transmis correspondant aux symboles S1 et S2 reçus sont connus.

Par contre, ce n'est pas le cas pour les symboles de référence de l'en-tête c'est-à-dire les symboles FCHᵢ.

Néanmoins, comme indiqué ci-avant, ces symboles FCHᵢ ont été codés à l'émission de façon différentielle et particulièrement robuste. Leur décodage ne nécessite donc pas la connaissance de la fonction de transfert du canal.

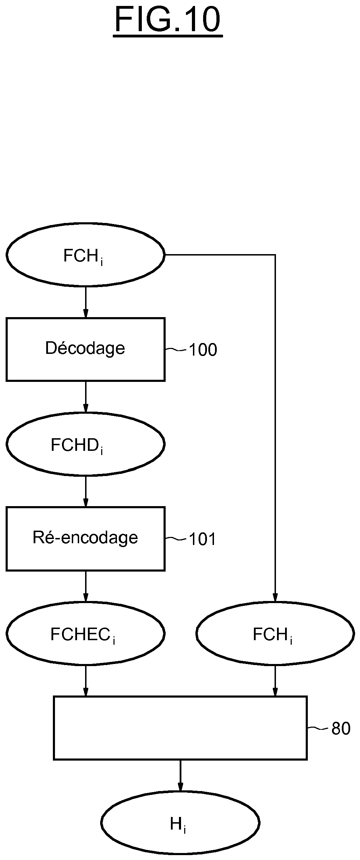

La figure 10 illustre un exemple d'estimation d'une fonction de transfert Hᵢ du canal à partir du symbole FCHᵢ de l'en-tête reçu.

On procède tout d'abord au décodage (étape 100) du symbole reçu FCHᵢ.

A cet égard, les moyens de décodage comportent classiquement des moyens configurés pour retirer de chaque symbole le préfixe cyclique, suivis de moyens configurés pour effectuer la transformée de Fourier rapide directe FFT.

Les moyens de décodage comportent également des moyens de démappage (demapping means) fournissant pour chaque porteuse une valeur du coefficient de modulation correspondant (bin). Ces moyens de démappage sont suivis d'un module configuré pour déterminer pour chaque coefficient de modulation une indication de confiance (décision douce : « soft decision ») de ladite valeur. Ce module est classique et connu en soi et utilise par exemple un algorithme du type LogMAP.

Les moyens de décodage comportent également des moyens de désentrelacement suivis d'un décodeur, par exemple un décodeur de type Viterbi, suivi de moyens aptes à effectuer un contrôle de parité. La sortie de ces moyens est connectée à la borne de sortie BS du sous-étage ET20 qui est connectée aux moyens formant la couche MAC du récepteur.

Puisque les différents symboles FCHᵢ sont référencés par rapport aux symboles précédents dans la trame, il est nécessaire de décoder tous les symboles FCHᵢ de l'en-tête avec les moyens de décodage mentionnés ci-avant. Puis, après vérification que le contrôle de parité est correct, on peut obtenir les différents symboles décodés FCHDᵢ.

On effectue alors dans l'étape 101 un réencodage de chacun de ces symboles FCHDᵢ en utilisant un encodeur convolutionnel, un entrelaceur et un moyen de mappage analogues aux moyens correspondants ENC, INTL, MP illustrés sur la figure 1 pour la partie émetteur.

On notera à cet égard que l'on reste dans le domaine fréquentiel.

On obtient alors des symboles réencodés FCHECᵢ correspondant aux symboles transmis.

On peut alors, dans l'étape 80 analogue à l'étape 80 de la figure 8, obtenir les fonctions de transfert Hᵢ associées aux différents symboles FCHᵢ à partir de ces symboles reçus FCHᵢ et des symboles réencodés FCHECᵢ.

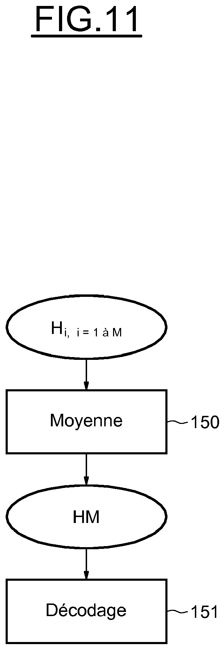

Au lieu d'utiliser simplement, comme mentionné dans la norme PLC-G3, les symboles S1 et S2 d'une trame pour estimer la fonction de transfert du canal, on peut, comme illustré sur la figure 11, avantageusement utiliser les M (M=15) fonctions de transfert Hᵢ associées aux 15 symboles de référence pour en faire une moyenne (étape 150) dans le bloc moyenneur MMY (figure 3) de façon à obtenir la fonction de transfert moyenne HM qui va alors être utilisée pour le décodage (étape 151) des symboles P0, P1, .... du champ utile PLD de la trame. Cette fonction de transfert HM est prise en compte pour le décodage, comme il est connu par l'homme du métier, au niveau du moyen de démappage incorporé dans les moyens de décodage.

On augmente ainsi de façon significative le rapport signal sur bruit de la fonction de transfert HM, ce qui se traduit *in fine* par une amélioration de plusieurs dB des performances de décodage.

## Revendications

1. Procédé de traitement d'un signal analogique de canal issu d'un canal de transmission, le signal analogique de canal véhiculant des trames (TRM) de symboles, et le canal de transmission étant considéré comme étant linéaire et temporellement invariant pour toute la durée d'au moins une trame, le procédé comprenant une conversion analogique/numérique du signal analogique de canal de façon à obtenir un signal numérique de canal, un traitement numérique d'estimation de canal et un décodage de symboles effectués sur le signal numérique de canal, **caractérisé en ce que**
le traitement numérique d'estimation de canal comprend, pour ladite au moins une trame, une élaboration d'au moins trois fonctions de transfert (Hᵢ) dudit canal respectivement associées à au moins trois symboles de référence (SYMRᵢ) de ladite au moins une trame, et un traitement de moyennage (150) desdites fonctions de transfert obtenues de façon à obtenir une fonction de transfert moyenne (HM), et
le décodage (151) des symboles de ladite au moins une trame suivant lesdits symboles de référence est effectué en utilisant cette fonction de transfert moyenne.

2. Procédé selon la revendication 1, dans lequel le traitement numérique d'estimation de canal comprend, pour ladite au moins une trame une élaboration de M fonctions de transfert (Hᵢ) respectivement associées à M symboles de référence successifs de ladite au moins une trame, M étant supérieur ou égal à 3.

3. Procédé selon la revendication 2, dans lequel le signal analogique de canal est issu d'une conversion numérique/analogique d'un signal numérique initial, et lorsque la fréquence d'échantillonnage du signal numérique de canal est différente de la fréquence d'échantillonnage du signal numérique initial, le traitement numérique d'estimation de canal comprend une élaboration de M fonctions de transfert de base (HBᵢ) respectivement associées auxdits M symboles de référence de ladite trame reçue, et un traitement (801) de correction de ces M fonctions de transfert de base avec un déphasage (DPHC) correspondant à ce décalage de fréquence d'échantillonnage de façon à obtenir lesdites M fonctions de transfert (Hᵢ).

4. Procédé selon l'une des revendications précédentes, dans lequel les symboles de référence de la trame reçue correspondent à des symboles connus (S1, S2) de la trame transmise et/ou sont des symboles (FCHᵢ) décodables sans connaître la fonction de transfert du canal de transmission.

5. Procédé selon la revendication 4, dans lequel chaque élaboration d'une fonction de transfert associé à un symbole décodable reçu (FCHᵢ) comprend un décodage (100) du symbole reçu, un ré-encodage (101) de ce symbole décodé de façon à obtenir un symbole ré-encodé (FCHECᵢ) et une détermination de la fonction de transfert du canal à partir dudit symbole ré-encodé et dudit symbole décodable reçu.

6. Procédé selon l'une des revendications précédentes, dans lequel le signal analogique de canal est modulé selon une modulation OFDM.

7. Procédé selon l'une des revendications précédentes, dans lequel le canal de transmission est une ligne électrique et le signal analogique de canal est véhiculé par courant porteur de ligne.

8. Procédé selon la revendication 7, dans lequel le signal analogique de canal est conforme à la norme PLC-G3.

9. Procédé selon les revendications 4 et 8, dans lequel chaque trame reçue comporte un préambule (PRM) suivi d'un en-tête (HD) suivi d'un champ utile (PLD) et lesdits symboles de référence comportent les symboles (FCHi) de l'entête et deux symboles (S1, S2) du champ utile correspondant à deux symboles connus de la trame transmise.

10. Récepteur, comprenant un étage d'entrée (ET1) destiné à être connecté sur un canal de transmission et configuré pour délivrer un signal analogique de canal issu du canal de transmission, le signal analogique de canal étant destiné à véhiculer des trames de symboles, et le canal de transmission étant considéré comme étant linéaire et temporellement invariant pour toute la durée d'au moins une trame, un étage (CAN) de conversion analogique/numérique du signal analogique de canal pour délivrer un signal numérique de canal, et un étage (ET2) de traitement dudit signal numérique de canal comprenant des moyens d'estimation de canal et des moyens de décodage de symboles, **caractérisé en ce que** les moyens d'estimation comprennent des moyens d'élaboration configurés pour élaborer pour ladite au moins une trame, au moins trois fonctions de transfert (Hᵢ) dudit canal respectivement associées à au moins trois symboles de référence (SYMRᵢ) de ladite au moins une trame, et un bloc moyenneur configuré pour effectuer un traitement de moyennage (150) desdites fonctions de transfert obtenues de façon à obtenir une fonction de transfert moyenne (HM), et les moyens de décodage sont configurés pour décoder (151) les symboles de ladite au moins une trame suivant lesdits symboles de référence en utilisant cette fonction de transfert moyenne.

11. Récepteur selon la revendication 10, dans lequel les moyens d'élaboration sont configurés pour élaborer pour ladite au moins une trame, M fonctions de transfert (Hᵢ) respectivement associées à M symboles de référence successifs de ladite au moins une trame, M étant supérieur ou égal à 3.

12. Récepteur selon la revendication 11, dans lequel le signal analogique de canal est issu d'une conversion numérique/analogique d'un signal numérique initial, et lorsque la fréquence d'échantillonnage du signal numérique de canal est différente de la fréquence d'échantillonnage du signal numérique initial, les moyens d'élaboration (MLB) sont en outre configurés pour élaborer M fonctions de transfert de base (HBᵢ) respectivement associées auxdits M symboles de référence de ladite trame reçue, et corriger ces M fonctions de transfert de base avec un déphasage (DPHC) correspondant à ce décalage de fréquence d'échantillonnage de façon à obtenir lesdites M fonctions de transfert (Hᵢ).

13. Récepteur selon l'une des revendications 10 à 12, dans lequel les symboles de référence (SYMRᵢ) de la trame reçue correspondent à des symboles connus (S1, S2) de la trame transmise et/ou sont des symboles (FCHᵢ) décodables sans connaître la fonction de transfert du canal de transmission.

14. Récepteur selon la revendication 13, dans lequel les moyens d'élaboration sont configurés pour élaborer une fonction de transfert associé à un symbole décodable reçu (FCHᵢ) par un décodage (100) du symbole reçu, un ré-encodage (101) de ce symbole décodé de façon à obtenir un symbole ré-encodé (FCHECᵢ) et une détermination de la fonction de transfert du canal à partir dudit symbole ré-encodé et dudit symbole décodable reçu.

15. Récepteur selon l'une des revendications 10 à 14, dans lequel le signal est modulé selon une modulation OFDM.

16. Récepteur selon l'une des revendications 10 à 15, dans lequel le canal de transmission est une ligne électrique et le signal analogique de canal est destiné à être véhiculé par courant porteur de ligne.

17. Récepteur selon la revendication 16, dans lequel le signal analogique de canal est conforme à la norme PLC-G3.

18. Récepteur selon les revendications 13 et 17, dans lequel chaque trame reçue (TRM) comporte un préambule (PRM) suivi d'un en-tête (HD) suivi d'un champ utile (PLD) et lesdits symboles de référence comportent les symboles de l'entête (FCHᵢ) et deux symboles du champ utile correspondant à deux symboles connus (S1, S2) de la trame transmise.

## Patentansprüche

1. Verfahren zum Verarbeiten eines analogen Kanalsignals aus einem Übertragungssignal, wobei das analoge Kanalsignal Symbolraster (TRM) befördert und der Übertragungskanal als linear und zeitlich unveränderlich für die gesamte Dauer mindestens eines Rasters angesehen wird, wobei das Verfahren eine Analog-/Digital-Wandlung des analogen Kanalsignals, um ein digitales Kanalsignal zu erhalten, eine digitale Kanalschätzungsverarbeitung und eine Decodierung von Symbolen umfasst, die an dem digitalen Kanalsignal durchgeführt werden, **dadurch gekennzeichnet, dass**
die digitale Kanalschätzungsverarbeitung für den mindestens einen Raster eine Ausarbeitung von mindestens drei Transferfunktionen (Hᵢ) des Kanals umfasst, die mindestens drei Referenzsymbolen (SYMRᵢ) des mindestens einen Rasters zugewiesen werden, und eine Mittelwertbildungsverarbeitung (150) der erhaltenen Transferfunktionen, um eine mittelwertige Transferfunktion (HM) zu erhalten,
und
die Decodierung (151) der Symbole des mindestens einen Rasters gemäß den Referenzsymbolen unter Verwendung dieser mittelwertigen Transferfunktion durchgeführt wird.

2. Verfahren nach Anspruch 1, wobei die digitale Kanalschätzungsverarbeitung für den mindestens einen Raster eine Ausarbeitung von M Transferfunktionen (Hᵢ) umfasst, die jeweils M aufeinanderfolgenden Referenzsymbolen des mindestens einen Rasters zugewiesen werden, wobei M größer oder gleich 3 ist.

3. Verfahren nach Anspruch 2, wobei das analoge Kanalsignal aus einer Analog-/Digital-Wandlung eines ursprünglichen digitalen Signals stammt, und wenn sich die Abtastfrequenz des digitalen Kanalsignals von der Abtastfrequenz des ursprünglichen digitalen Signals unterscheidet, umfasst die digitale Kanalschätzungsverarbeitung eine Ausarbeitung von M Basistransferfunktionen (HBᵢ), die jeweils den M Referenzsymbolen des empfangenen Rasters zugewiesen sind, und eine Korrekturverarbeitung (801) dieser M Basistransferfunktionen mit einer Phasenverschiebung (DPHC), die diesem Abtastfrequenzversatz entspricht, um die M Transferfunktionen (Hᵢ) zu erhalten.

4. Verfahren nach einem der vorstehenden Ansprüche, wobei die Referenzsymbole des empfangenen Rasters bekannten Symbolen (S1, S2) des übertragenen Rasters entsprechen, und/oder Symbole (FCHᵢ) sind, die ohne die Transferfunktion des Übertragungskanals zu kennen, decodierbar sind.

5. Verfahren nach Anspruch 4, wobei jede Ausarbeitung einer Transferfunktion, die einem empfangenen decodierbaren Symbol (FCHᵢ) zugewiesen ist, eine Decodierung (100) des empfangenen Symbols, eine erneute Codierung (101) dieses decodierten Symbols, um ein erneut codiertes Symbol (FCHECᵢ) zu erhalten, und eine Bestimmung der Transferfunktion des Kanals aus dem erneut codierten Symbol und dem empfangenen decodierbaren Symbol umfasst.

6. Verfahren nach einem der vorstehenden Ansprüche, wobei das analoge Kanalsignal gemäß einer Modulation OFDM moduliert wird.

7. Verfahren nach einem der vorstehenden Ansprüche, wobei der Übertragungskanal eine Stromleitung ist und das analoge Kanalsignal durch einen Leitungsträgerstrom befördert wird.

8. Verfahren nach Anspruch 7, wobei das analoge Kanalsignal der Norm PLC-G3 entspricht.

9. Verfahren nach den Ansprüchen 4 und 8, wobei jeder empfangene Raster eine Präambel (PRM), gefolgt von einer Kopfzeile (HD), gefolgt von einem nutzbaren Feld (PLD) beinhaltet, und die Referenzsymbole die Symbole (FCHᵢ) der Kopfzeile und zwei Symbole (S1, S2) des nutzbaren Feldes beinhalten, die zwei bekannten Symbolen des übertragenen Rasters entsprechen.

10. Empfänger, umfassend eine Eingangsstufe (ET1), die dazu bestimmt ist, mit einem Übertragungskanal verbunden zu werden, und konfiguriert ist, um ein analoges Kanalsignal aus dem Übertragungskanal abzugeben, wobei das analoge Kanalsignal dazu bestimmt ist, Symbolraster zu befördern, und der Übertragungskanal als linear und zeitlich unveränderlich für die gesamte Dauer mindestens eines Rasters angesehen wird, eine Analog-/Digital-Wandlungsstufe (CAN) des analogen Kanalsignals, um ein digitales Kanalsignal abzugeben, und eine Verarbeitungsstufe (ET2) des digitalen Kanalsignals, das Mittel zur Kanalschätzung und Mittel zur Decodierung von Symbolen umfasst, **dadurch gekennzeichnet, dass** die Mittel zur Schätzung Mittel zur Ausarbeitung umfassen, die konfiguriert sind, um für den mindestens einen Raster mindestens drei Transferfunktionen (Hᵢ) des Kanals auszuarbeiten, die mindestens drei Referenzsymbolen (SYMRᵢ) des mindestens einen Rasters zugewiesen werden, und eine Mittelwertbildungsblock, der konfiguriert ist, um eine Mittelwertbildungsverarbeitung (150) der erhaltenen Transferfunktionen durchzuführen, um eine mittelwertige Transferfunktion (HM) zu erhalten, und die Mittel zum Decodieren konfiguriert sind, um die Symbole des mindestens einen Rasters gemäß den Referenzsymbolen unter Verwendung dieser mittelwertigen Transferfunktion zu decodieren (151).

11. Empfänger nach Anspruch 10, wobei die Mittel zur Ausarbeitung konfiguriert sind, um für den mindestens einen Raster M Transferfunktionen (Hᵢ) auszuarbeiten, die jeweils M aufeinanderfolgenden Referenzsymbolen des mindestens einen Rasters zugewiesen werden, wobei M größer oder gleich 3 ist.

12. Empfänger nach Anspruch 11, wobei das analoge Kanalsignal aus einer Analog-/Digital-Wandlung eines ursprünglichen digitalen Signals stammt, und wenn sich die Abtastfrequenz des digitalen Kanalsignals von der Abtastfrequenz des ursprünglichen digitalen Signals unterscheidet, sind die Ausarbeitungsmittel (MLB) weiter konfiguriert, um M Basistransferfunktionen (HBᵢ), die jeweils den M Referenzsymbolen des empfangenen Rasters zugewiesen sind, auszuarbeiten, und diese M Basistransferfunktionen mit einer Phasenverschiebung (DPHC), die diesem Stichprobenfrequenzversatz entspricht, zu korrigieren, um die M Transferfunktionen (Hᵢ) zu erhalten.

13. Empfänger nach einem der Ansprüche 10 bis 12, wobei die Referenzsymbole (SYMRᵢ) des empfangenen Rasters bekannten Symbolen (S1, S2) des übertragenen Rasters entsprechen, und/oder Symbole (FCHᵢ) sind, die ohne die Transferfunktion des Übertragungskanals zu kennen, decodierbar sind.

14. Empfänger nach Anspruch 13, wobei die Ausarbeitungsmittel konfiguriert sind, um eine Transferfunktion, die einem empfangenen decodierbaren Symbol (FCHᵢ) zugewiesen ist, durch Decodieren (100) des empfangenen Symbols, erneutes Codieren (101) dieses decodierten Symbols, um ein erneut codiertes Symbol (FCHECᵢ) zu erhalten, und eine Bestimmung der Transferfunktion des Kanals aus dem erneut codierten Symbol und dem empfangenen decodierbaren Symbol auszuarbeiten.

15. Empfänger nach einem der Ansprüche 10 bis 14, wobei das Signal gemäß einer Modulation OFDM moduliert wird.

16. Empfänger nach einem der Ansprüche 10 bis 15, wobei der Übertragungskanal eine Stromleitung ist und das analoge Kanalsignal dazu bestimmt ist, durch einen Leitungsträgerstrom befördert zu werden.

17. Empfänger nach Anspruch 16, wobei das analoge Kanalsignal der Norm PLC-G3 entspricht.

18. Empfänger nach den Ansprüchen 13 und 17, wobei jeder empfangene Raster (TRM) eine Präambel (PRM), gefolgt von einer Kopfzeile (HD), gefolgt von einem nutzbaren Feld (PLD) beinhaltet, und die Referenzsymbole die Symbole (FCHᵢ) der Kopfzeile und zwei Symbole des nutzbaren Feldes beinhalten, die zwei bekannten Symbolen (S1, S2) des übertragenen Rasters entsprechen.

## Claims

1. Method for processing an analogue channel signal from a transmission channel, the analogue channel signal conveying symbol frames (TRM), and the transmission channel being considered as being linear and time-invariant for the entire duration of at least one frame, the method comprising an analogue/digital conversion of the analogue channel signal so as to obtain a digital channel signal, a digital channel estimation processing and a decoding of symbols carried out on the digital channel signal, **characterised in that**
the digital channel estimation processing comprises, for said at least one frame, an elaboration of at least three transfer functions (Hᵢ) of said channel respectively associated with at least three reference symbols (SYMRᵢ) of said at least one frame, and an averaging processing (150) of said transfer functions obtained so as to obtain an average transfer function (HM), and
the decoding (151) of the symbols of said at least one frame according to said reference symbols is carried out using this average transfer function.

2. Method according to claim 1, wherein the digital channel estimation processing comprises, for said at least one frame, an elaboration of M transfer functions (Hᵢ) respectively associated with M successive reference symbols of said at least one frame, M being greater than or equal to 3.

3. Method according to claim 2, wherein the analogue channel signal is derived from a digital/analogue conversion of an initial digital signal, and when the sampling frequency of the digital channel signal is different from the sampling frequency of the initial digital signal, the digital channel estimation processing comprises an elaboration of M basic transfer functions (HBᵢ)respectively associated with said M reference symbols of said received frame, and a correction processing (801) of these M basic transfer functions with a phase shift (DPHC) corresponding to this sampling frequency lag so as to obtain said M transfer functions (Hᵢ).

4. Method according to one of the preceding claims, wherein the reference symbols of the received frame correspond to known symbols (S1, S2) of the transmitted frame and/or are decodable symbols (FCHᵢ) without knowing the transfer function of the transmission channel.

5. Method according to claim 4, wherein each elaboration of a transfer function associated with a received decodable symbol (FCHᵢ) comprises a decoding (100) of the received symbol, a re-encoding (101) of this decoded symbol so as to obtain a re-encoded symbol (FCHECᵢ) and a determination of the transfer function of the channel from said re-encoded symbol and said received decodable signal.

6. Method according to one of the preceding claims, wherein the analogue channel signal is modulated according to an OFDM modulation.

7. Method according to one of the preceding claims, wherein the transmission channel is a power line and the analogue channel signal is conveyed by powerline communications.

8. Method according to claim 7, wherein the analogue channel signal is compliant with the PLC-G3 standard.

9. Method according to claims 4 and 8, wherein each received frame includes a preamble (PRM) followed by a header (HD) followed by a useful field (PLD) and said reference symbols include the symbols (FCHi) of the header and two symbols (S1, S2) of the useful field corresponding to two known symbols of the transmitted frame.

10. Receiver, comprising an input stage (ET1) intended to be connected to a transmission channel and configured to deliver an analogue channel signal derived from the transmission signal, the analogue channel signal being intended to convey symbol frames, and the transmission channel being considered as being linear and time-invariant for the entire duration of at least one frame, an analogue/digital conversion stage (CAN) of the analogue channel signal to deliver a digital channel signal, and a processing stage (ET2) of said digital channel signal comprising channel estimation means and symbol decoding means, **characterised in that** the estimation means comprise elaboration means configured to elaborate for said at least one frame, at least three transfer functions (Hᵢ) of said channel respectively associated with at least three reference symbols (SYMRᵢ) of said at least one frame, and an averaging module configured to carry out an averaging processing (150) of said transfer functions obtained so as to obtain an average transfer function (HM), and the decoding means are configured to decode (151) the symbols of said at least one frame according to said reference symbols using this average transfer function.

11. Receiver according to claim 10, wherein the elaboration means are configured to elaborate for said at least one frame, M transfer functions (Hᵢ) respectively associated with M successive reference symbols of said at least one frame, M being greater than or equal to 3.

12. Receiver according to claim 11, wherein the analogue channel signal is derived from a digital/analogue conversion of an initial digital signal, and when the sampling frequency of the digital channel signal is different from the sampling frequency of the initial digital signal, the elaboration means (MLB) are furthermore configured to elaborate M basic transfer functions (HBᵢ)respectively associated with said M reference symbols of said received frame, and correct these M basic transfer functions with a phase shift (DPHC) corresponding to this sampling frequency lag so as to obtain said M transfer functions (Hᵢ).

13. Receiver according to one of claims 10 to 12, wherein the reference symbols (SYMRᵢ) of the received frame correspond to known symbols (S1, S2) of the transmitted frame and/or are decodable symbols (FCHᵢ) without knowing the transfer function of the transmission channel.

14. Receiver according to claim 13, wherein the elaboration means are configured to elaborate a transfer function associated with a received decodable symbol (FCHᵢ) by a decoding (100) of the received symbol, a re-encoding (101) of this decoded symbol so as to obtain a re-encoded symbol (FCHECᵢ) and a determination of the transfer function of the channel from said re-encoded symbol and said received decodable signal.

15. Receiver according one of claims 10 to 14, wherein the signal is modulated according to an OFDM modulation.

16. Receiver according to one of claims 10 to 15, wherein the transmission channel is a power line and the analogue channel signal is intended to be conveyed by powerline communications.

17. Receiver according to claim 16, wherein the analogue channel signal is compliant with the PLC-G3 standard.

18. Receiver according to claims 13 and 17, wherein each received frame (TRM) includes a preamble (PRM) followed by a header (HD) followed by a useful field (PLD) and said reference symbols include the symbols of the header (FCHᵢ) and two symbols of the useful field corresponding to two known symbols (S1, S2) of the transmitted frame.
